# EUROPÄISCHE PATENTSCHRIFT

(11) **EP 2 828 025 B1**
(45) Veröffentlichungstag und Bekanntmachung des Hinweises auf die Patenterteilung: **10.05.2017**
(21) Anmeldenummer: 13713112.4
(22) Anmeldetag: 18.03.2013
(51) Int. Cl.: B23H 3/06, B23H 3/04

(54) **ELEKTRODEN ZUR BEARBEITUNG EINES WERKSTÜCKES SOWIE VERFAHREN ZUR HERSTELLUNG UND VERWENDUNG SOLCHER ELEKTRODEN**
ELECTRODES FOR MACHINING A WORKPIECE, METHOD OF MANUFACTURING AND USE OF SUCH ELECTRODES
ÉLECTRODES POUR USINAGE D'UNE PIÈCE AINSI QUE PROCÉDÉ POUR LA FABRICATION ET L'UTILISATION DE TELS ÉLECTRODES

(30) Priorität: 20.03.2012 DE 102012102325
(43) Veröffentlichungstag der Anmeldung: 28.01.2015
(73) Patentinhaber: OxiMaTec GmbH Oxide Material Technologies, 73269 Hochdorf (DE); Hans-Hermann Bosch GmbH, 73342 Bad Ditzenbach (DE)
(72) Erfinder: BURGER, Wolfgang, 73207 Plochingen (DE); LEONHARDT, Wolfgang, 73269 Hochdorf (DE); WAGNER, Christof, 73326 Deggingen (DE)
(74) Vertreter: Fleck, Hermann-Josef
(86) Internationale Anmeldenummer: PCT/EP2013/055560
(87) Internationale Veröffentlichungsnummer: WO 2013/139733

(56) Entgegenhaltungen:
- EP-A1- 2 418 037
- DE-A1-102004 028 658
- DE-A1-102008 018 742

## Beschreibung

Die Erfindung bezieht sich auf eine Elektrode zur Bearbeitung eines Werkstückes unter elektrochemischem Abtragen von metallischem Werkstoff mit einem Elektrodenkörper und einer auf diesem zumindest in einem Arbeitsbereich aufgetragenen Beschichtung, sowie auf ein Verfahren zur Herstellung und eine Verwendung einer solchen Elektrode. Eine Elektrode zur Bearbeitung eines Werkstücks unter elektrochemischem Abtragen von metallischem Werkstoff ist in der EP 2 418 037 A1, die als nächstliegender Stand der Technik angesehen werden kann, angegeben. Die Elektrode besteht dabei zumindest teilweise aus leitenden Kunststoff oder einem nichtmetallischen Material, insbesondere Kunststoff, das mit gängigen Mikrobearbeitungstechniken oder Mikrostrukturierungstechniken bearbeitet werden kann.

Eine andere Elektrode ist in der DE 10 2008 018 742 A1 angegeben. Der Elektrodenkörper besteht dabei aus einem Halbleitermaterial, insbesondere aus Silizium, und ist auf seiner erodierenden Seite mit einer isolierenden Beschichtung aus Teilabschnitten versehen, zwischen denen erodierende Arbeitsbereiche des Halbleitermaterials frei gelassen sind, die ihrerseits zusätzlich metallisch beschichtet sein können. Die zusätzliche metallische Beschichtung neben der stets aufgetragenen Isolierbeschichtung führt zu erheblichem Herstellungsaufwand.

In der WO 2006/000 200 A1 ist eine Vorrichtung zum elektrochemischen Schneiden mit einer Werkzeugelektrode gezeigt, die aus elektrisch leitfähigen Fasern oder Faserbündeln besteht, welche in ein Trägermaterial aus Keramik und/oder Kunststoff oder aus Glas oder Glasfasern eingebettet sind. Als Faserwerkstoff ist Kohlenstoff oder Metall oder Halbleiterwerkstoff oder Kunststoff, Glas, Keramik oder Protein mit Wasser jeweils in elektrisch leitfähiger Form gegebenenfalls auch in Kombination vorgesehen. Die Faserwerkzeugelektrode kann ganz oder abschnittsweise eine Mikrotextur oder eine leitende oder isolierende Beschichtung aufweisen, die auch metallisch ausgeführt sein kann. Derartige Ausführungen sind auf bestimmte Bearbeitungsvorgänge, insbesondere Schneiden, beschränkt.

In der DE 10 2004 028 658 A1 ist eine Komposit-Werkzeugelektrode zur elektrochemischen Materialbearbeitung eines Werkstücks offenbart, die aus einem elektrisch nicht leitenden Grundkörper und in diesen eingebetteten Elektrodenteilen aus elektrisch leitenden Materialien besteht. Der elektrisch nicht leitfähige Grundkörper besteht aus Keramik, Polymerbeton, Glas, Gips oder einem Kunststoff und kann zu Schwierigkeiten bei der Herstellung von Mikrostrukturen führen.

In der US 6,586,699 B1 ist eine Vorrichtung zur Mikrobearbeitung mittels einer Elektrode zum elektrochemischen Abtragen von metallischen Werkstoffen gezeigt, die eine Elektrode mit einer Halbleiteranordnung aufweist. Die Elektrode umfasst ein Halbleitersubstrat mit einer Oberfläche, von der eine Vielzahl von Elektrodenabschnitten vorstehen, die integral mit dem Halbleitersubstrat gebildet sind. Das Halbleitermaterial des Substrats und der Vorsprünge ist so dotiert, dass es leitfähig ist. Die DE 102 37 324 A1 zeigt ein Verfahren zur Herstellung einer Werkzeugelektrode für die elektrochemische Bearbeitung von Werkstücken, bei dem ein Elektrodenkörper aus elektrisch leitendem Trägermaterial mit im Wesentlichen glatter Oberfläche mit einem Isoliermaterial beschichtet wird.

Eine weitere Elektrode ist in der DE 10 2010 032 326 A1 gezeigt. Bei dieser bekannten Elektrode ist die im Arbeitsbereich befindliche Stirnfläche als Wirkfläche zum Abtragen eines ihr über einen Arbeitsspalt gegenüberliegenden Oberflächenbereichs eines Werkstücks ausgebildet und über einen Bund in radialer Richtung erweitert. An den Radialbund auf dessen der Wirkfläche abgekehrter Seite ist die Elektrode umfangsseitig mit einer äußeren elektrischen Isolation ummantelt. Im Innern der Elektrode befindet sich ein Elektrolytkanal, der mit einer inneren elektrischen Isolationsschicht abgedeckt ist. Die Wirkfläche kann unterschiedlich geformt, z. B. abgerundet sein. Bei der Bearbeitung wird zwischen der Elektrode und dem Werkstück eine elektrische Spannung angelegt, wobei die Elektrode als Kathode (Minus-Pol) und das Werkstück als Anode (Plus-Potential) dient und Werkstückmaterial im Bearbeitungsbereich über einen Elektrolyten abgetragen wird, während die Breite des Arbeitsspalts vibrierend verändert wird. Eine solche elektrochemische Bearbeitungseinrichtung ist in der DE 20 2007 007 044 U1 gezeigt.

Das Prinzip eines solchen elektrochemischen Abtragens einer Werkstückoberfläche beruht auf einer elektrochemischen Reaktion von einem metallischen Werkstoff mit einem in Ionen dissoziierten elektrisch leitenden Wirkmedium unter Einwirkung von elektrischem Strom zu einer chemischen Verbindung, welche im Wirkmedium löslich ist oder ausfällt. Der Stromfluss wird durch die äußere Spannungsquelle hervorgerufen.

Das Verfahren ist ein elektrochemisches Senkerodierverfahren mit vibrierender Elektrode und geregeltem Arbeitsspalt. Elektrische Steuerungsparameter können z. B. der genannten DE 20 2007 007 044 U1 mit weiteren Literaturangaben entnommen werden. Zwischen Elektrode und Werkstück wird ein gepulster Gleichstrom erzeugt.

Das Werkstück löst sich entsprechend der Geometrie der nachfahrenden Elektrode anodisch auf.

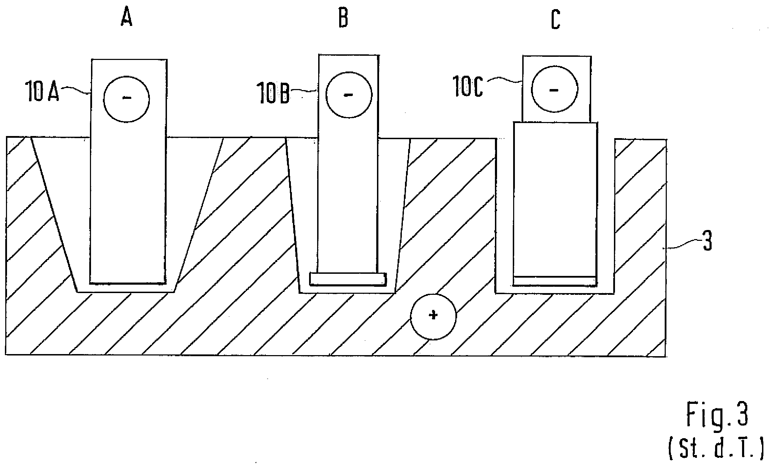

Mit einem solchen bekannten Verfahren lassen sich hochpräzise Bauteile herstellen. Ein limitierender Faktor hinsichtlich Präzision sind derzeit die Elektroden. Über die Fräs- und Erodiertechnik können sehr präzise Elektroden hergestellt werden. Das heute hauptsächlich vorhandene Problem sind weniger die Elektroden selbst, sondern der von ihnen hervorgerufene Seitenspalteffekt. Seitenspalteffekte limitieren die Präzision beim Abtragen (vgl. Fig. 3 mit Elektroden 10A, 10B).

Nach dem Stand der Technik gibt es eine Reihe von Ansätzen, diese Seitenspalteffekte zu eliminieren. Ein Ansatz (ohne vorhandenen druckschriftlichen Beleg) geht z. B. von Aluminiumelektroden aus, weiche an den Seitenwänden eloxiert, also elektrochemisch oxidiert werden. Dieser Ansatz führt zwar zu einer Verbesserung im Hinblick auf den Seitenspalteffekt. Nachteilig ist hier jedoch, dass sich Ionen aus dem Metall herauslösen, welche den Prozess negativ beeinflussen.

Ein anderer Ansatz ist die Beschichtung der Seitenwände mit elektrisch isolierenden Schichten mittels Dünnschicht- oder Dickschichttechnologie, wie prinzipiell in Fig. 3 gezeigt (vgl. Elektrode 10C). Bei diesem Ansatz besteht das Problem, dass sich diese Schichten nur sehr schwer auf bestimmte lokale Bereiche am Trägermaterial der Elektrode auftragen lassen. Als weiteres Problem zeigt sich teilweise eine mangelhafte Haftfestigkeit zwischen Schicht und Substrat.

Ein zu unterscheidendes, anderes Abtragverfahren ist das Funkenerodierverfahren, wozu es ebenfalls verschiedene Elektroden gibt, wie z. B. die EP 0 925 138 B1 und die DE 10 2007 009 191 A1 zeigen.

Der Erfindung liegt die Aufgabe zugrunde, eine Elektrode der eingangs genannten Art bereit zu stellen, die mit möglichst wenig Aufwand die exakte Ausbildung feiner Mikrostrukturen zulässt und mit der eine präzise Bearbeitung eines Werkstücks erreicht wird. Ferner soll ein Verfahren zur Herstellung der Elektrode und eine Verwendung angegeben werden.

Diese Aufgabe wird mit den Merkmalen des Anspruches 1 gelöst. Hierbei ist vorgesehen, dass der Elektrodenkörper aus einem wenig leitenden Werkstoff ohne isolierende Beschichtung um den Arbeitsbereich hergestellt ist, dass die Beschichtung aus einem relativ dem Elektrodenkörper elektrisch hoch leitenden Beschichtungsmaterial gebildet, und dass der wenig leitende Werkstoff aus der Stoffgruppe der erodierbaren Keramiken oder der elektrisch leitenden Perowskite gewählt ist. Bei dem Verfahren zur Herstellung einer derartigen Elektrode ist vorgesehen, dass ein Elektrodenkörper aus einer erodierbaren Keramik oder einem elektrisch leitenden Pe-rowskit hergestellt wird, dass der Elektrodenkörper zumindest im Arbeitsbereich mittels eines Erodierverfahrens formgebend bearbeitet wird und dass der Elektrodenkörper zumindest in dem geformten Arbeitsbereich mittels eines elektrisch leitfähigen Beschichtungsmaterials beschichtet wird.

Vorteilhaft ist zudem die Verwendung einer solchen Elektrode in einer Vorrichtung zur Bearbeitung von metallischen Werkstücken durch elektrochemisches Abtragen, bei dem der metallische Werkstoff des Werkstückes mit einem in Ionen dissoziierten elektrisch leitenden Wirkmedium unter Einwirkung von elektrischem Strom zu einer chemischen Verbindung reagiert, welche im Wirkmedium löslich ist oder ausfällt. Erfindungsgemäß ist der wenig leitende Werkstoff aus der Stoffgruppe der erodierbaren Keramiken oder der elektrisch leitenden Perowskite gewählt. Ein wesentlicher Vorteil ist dabei die Möglichkeit einer sehr filigranen Formgebung der Elektroden selbst, vorteilhaft mittels einer Erodierbearbeitung, insbesondere eines Funkenerodierverfahrens bzw. eines Erodierens mittels elektrischer Entladung (EDM = electrical discharge machining), womit eine Formbearbeitung im Submillimeterbereich exakt durchführbar ist. Beispiele hierfür sind dünne Schlitze, enge Bohrungen, Wabenstrukturen mit einer Breite von weniger als 0,8 mm sowie Mikrozahnräder. Die elektrische Leitfähigkeit der wenig leitenden Werkstoffe liegt dabei wesentlich unterhalb derjenigen metallischer Leiter, jedoch deutlich oberhalb derjenigen elektrischer Isolatoren. Die elektrische Leitfähigkeit des elektrisch wenig leitenden Werkstoffes liegt dabei z. B. im Bereich 10 - 150 S/cm, beispielsweise 40 - 75 S/cm.

Der wenig leitende Werkstoff hat zudem den wesentlichen Vorteil gegenüber einem Elektrodenkörper aus leitendem Material, dass der Seitenspalteffekt ohne aufwändige und störende Isolierbeschichtung minimiert wird.

Eine definierte, stabile Auftragung der Beschichtung wird dadurch erreicht, dass das elektrisch leitende, z. B. metallische Beschichtungsmaterial mittels eines Galvanisierungsverfahrens elektrolytisch auf dem Elektrodenkörper aufgetragen ist.

Eine präzise Herstellung der Elektrode in deren Arbeitsbereich wird ferner dadurch erreicht, dass die Beschichtung großflächig aufgetragen und an definierten, für die Bearbeitung eines Werkstücks nicht gewünschten Stellen abgetragen ist.

Für die Funktion der Elektrode bei der Formbearbeitung ist die Maßnahme von Vorteil, dass als Beschichtungsmaterial ein Edelmetall oder Halbedelmetall verwendet ist.

Dabei bestehen vorteilhafte Ausgestaltungsvarianten darin, dass das Beschichtungsmaterial Kupfer, Silber oder Legierungen derselben ist.

Eine filigrane Bearbeitung der Elektrode, die zu einer präzisen Formbearbeitung des Werkstücks wesentlich beiträgt, besteht darin, dass der Elektrodenkörper zumindest im Arbeitsbereich mittels eines Erodierverfahrens formgebend bearbeitet ist.

Eine für die Stromzuführung und Funktion der Elektrode weitere vorteilhafte Ausgestaltung wird dadurch erhalten, dass der Elektrodenkörper in seinem Inneren in mindestens einem Kanal mit einer mit der Beschichtung unmittelbar elektrisch verbundenen elektrisch leitenden Leitschicht versehen ist (wobei der Kanal hohl oder vollständig ausgefüllt sein kann), die bei der Bearbeitung elektrisch leitend mit dem Minuspol einer Spannungsquelle verbunden ist, an deren Pluspol bei der Bearbeitung das metallische Werkstück angeschlossen ist.

Bei dem Verfahren zur Herstellung der Elektrode besteht eine vorteilhafte Vorgehensweise darin, dass im Anschluss an den Beschichtungsvorgang an definierten Stellen die Beschichtung abgetragen wird. Hierdurch kann die Arbeitsfläche der Elektrode im Arbeitsbereich exakt strukturiert und an eine jeweilige Arbeitsaufgabe angepasst werden.

Eine weitere vorteilhafte Ausgestaltung des Verfahrens zur Herstellung einer Präzisionselektrode besteht darin, dass die Beschichtung elektrolytisch mittels eines Galvanisierungsverfahrens aufgetragen wird. Daneben kann der Schichtauftrag auf der Elektrode mittels CVD (chemical vapour deposition) und/oder PVD (physical vapour deposition) erfolgen.

Die Erfindung wird nachfolgend anhand von Ausführungsbeispielen unter Bezugnahme auf die Zeichnungen näher erläutert. Es zeigen:
- Fig. 1: eine schematische Darstellung einer Erodiervorrichtung mit einer Elektrode im zu bearbeitenden Bereich eines Werkstücks,
- Fig. 2: ein anderes Ausführungsbeispiel einer Elektrode im Bearbeitungsbereich eines Werkstückes und
- Fig. 3: eine schematische Darstellung zur Wirkungsweise herkömmlicher Elektroden zum elektrochemischen Abtragen von metallischem Werkstoff eines Werkstücks gemäß dem eingangs erläuterten Stand der Technik.

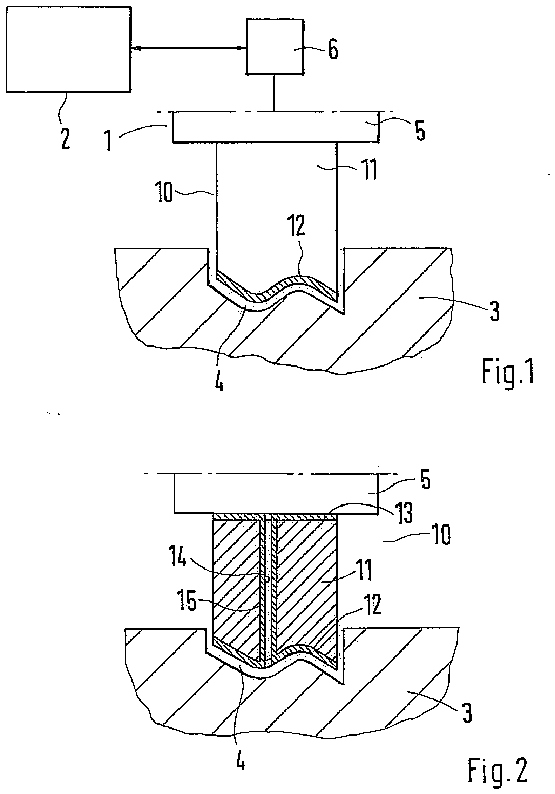

Fig. 1 zeigt eine Erodiervorrichtung zur Bearbeitung eines Werkstücks 3 mittels elektrochemischen Abtragens von metallischem Werkstoff des metallischen Werkstücks 3 im Arbeitsbereich einer Elektrode 10. Die Elektrode 10 ist in einem Elektrodenhalter 5 festgelegt, der Teil einer von einer Steuerungseinrichtung 2 gesteuerten Haltevorrichtung 6 ist. Mittels der Steuerungseinrichtung 2 kann über die Haltevorrichtung 6 ein Arbeitsspalt 4 im Arbeitsbereich zwischen dem zu bearbeitenden Oberflächenbereich des Werkstücks 3 und einer dieser zugekehrten Arbeitsfläche der Elektrode 10 vibrierend geändert werden, wobei die Vibrationsfrequenz z. B. in einem Bereich von ca. 10 bis 50 Hz und die Vibrationsamplitude z. B. im Bereich zwischen 100 und 500 µm liegt. Die Breite des Arbeitsspalts 4 liegt z. B. im Bereich zwischen 10 und 60 µm.

Die in Fig. 1 gezeigte Elektrode 10 weist einen Elektrodenkörper 11 auf, der aus einem elektrisch wenig leitenden Werkstoff besteht und in dem Arbeitsbereich, d. h. an der Arbeitsfläche, gezielt beschichtet ist, wo der Werkstoff des metallischen Werkstücks 3 elektrochemisch abgetragen werden soll. Als elektrisch wenig leitender Werkstoff für den Elektrodenkörper 11 werden erfindungsgemäß erodierbare Keramiken verwendet, oder elektrisch leitende Perowskite. Der aus elektrisch wenig bzw. niedrig leitfähigem Werkstoff hergestellte Elektrodenkörper 11 kann, insbesondere wenn er aus einer erodierbaren Keramik hergestellt ist, mit moderner Erodiertechnik in hochpräzise geometrische Form gebracht werden, womit seine Oberflächenkontur sehr genau an die zu erzeugende Oberflächenform des Werkstücks angepasst werden kann.

Die Beschichtung 12 im Arbeitsbereich, insbesondere also an der Arbeitsfläche der Elektrode 10, die dem zu bearbeitenden Oberflächenbereich des Werkstücks 3 über den Arbeitsspalt 4 gegenüber liegt, besteht aus einem hoch leitfähigen, insbesondere metallischen Material, bevorzugt aus einem Edelmetall bzw. Halbedelmetall, wie Kupfer, Silber oder Legierungen daraus. Besonders bevorzugt als Beschichtungsmaterial ist Kupfer.

Prinzipiell besteht die Möglichkeit, den aus der erodierbaren Keramik hergestellten Elektrodenkörper 11 relativ großflächig zu beschichten. In einem zweiten Arbeitsgang kann dann die Beschichtung 12 an nicht gewünschten Stellen mittels EDM (electrical discharge machining)-Technik gezielt abgetragen werden.

Geeignete Beschichtungsmaterialien sind an sich sämtliche elektrisch leitende Elemente, welche mittels Galvanisierverfahren elektrolytisch gezielt auf der Oberfläche des wenig leitenden Elektrodenkörpers 11 abgeschieden werden können, wobei die vorstehend genannten Edelmetalle bzw. Halbedelmetalle bevorzugt sind. Außerdem sind auch andere metallische Werkstoffe, insbesondere auch elektrisch leitende Metallverbindungen geeignet, wie z. B. leitende Hartstoffe, wie TiC (Titancarbid), TiN (Titannitrid), WC (Wolframcarbid). Diese werden vorzugsweise über CVD- und PVD-Verfahren abgeschieden bzw. aufgetragen.

Die mittels Erodiertechnik in hochpräzise geometrische Form gebrachte Oberfläche des Erodierkörpers 11 wird anschließend elektrolytisch gezielt mit einer definierten Schicht, z. B. im Bereich einiger µm versehen und kann an nicht gewünschten Stellen von der Beschichtung mittels der genannten EDM-Technik gezielt befreit werden. Die so sehr präzise hergestellten Elektroden 10 eignen sich beim elektrochemischen Abtragsverfahren zur Herstellung von Bauteilen mit a) extrem komplexer Geometrie und b) höchster Präzision. Auf diese Weise können dünne Schlitze, Bohrungen, Wabenstrukturen und dgl. mit einer Breite von weniger als 0,8 mm sowie Mikrozahnräder hergestellt werden.

Bei dem genannten elektrochemischen Abtragverfahren mit der Elektrode 10 bildet diese die mit dem Minus-Pol der angelegten Spannungsquelle verbundene Kathode, während das elektrisch leitende Werkstück 3 die mit dem Plus-Pol der Spannungsquelle verbundene Anode bildet. Der Strom fließt über das elektrisch zwar wenig, jedoch ausreichend leitende Material des Elektrodenkörpers 11 über die elektrisch gut leitende Beschichtung 12 und den Arbeitsspalt 4 zu dem Werkstück 3. Wie sich in Untersuchungen der Erfinder gezeigt hat, wird bei der elektrochemischen Bearbeitung mittels der so ausgebildeten Elektrode 10 ein Seitenspalteffekt minimiert bzw. praktisch unterbunden.

Bei dem in Fig. 2 gezeigten Ausführungsbeispiel ist in dem Elektrodenkörper 11 mindestens ein Kanal 14 gebildet, der mittels einer Leitschicht 15 aus elektrisch gut leitendem Material beschichtet bzw. vollständig ausgefüllt ist, beispielsweise aus dem gleichen Material wie die Beschichtung 12, und unmittelbar elektrisch leitend in die Beschichtung 12 übergeht. An dem dem Elektrodenhalter 5 zugekehrten Endbereich ist die Leitschicht 15 elektrisch gut leitend an den Minus-Pol der Spannungsquelle angeschlossen. Dabei kann in diesem Endbereich der Elektrode 10 eine weitere Kontaktschicht 13 aus elektrisch gut leitendem Material, beispielsweise aus dem gleichen Material wie die Beschichtung 12, flächig aufgetragen sein. Zum Aufbringen der Leitschicht 15 und der Kontaktschicht 13 können entsprechende Verfahren angewandt werden, wie beim Auftragen der Beschichtung 12. Über die Kontaktschicht 13 und die Leitschicht 15 wird ein guter Stromfluss unterstützt, während der Aufbau der Elektrode 10 der Ausbildung eines Seitenspalteffekts entgegenwirkt.

Der Erfindungsgegenstand kann in verschiedener Weise ausgeführt werden. Beispielsweise wird zwecks Erzeugung eines scharfkantigen quadratischen Sacklochs in einem Stahlbauteil mittels Erodiertechnik aus erodierbarer Keramik eine entsprechende Elektrode 10 hergestellt. Diese wird auf der Unterseite gezielt mit einer 5 µm dicken Kupferschicht versehen. Im anschließenden elektrochemischen Abtragsprozess wird nun exakt die gewünschte scharfkantige Kontur in dem Bauteil bzw. dem Werkstück realisiert.

Für die Herstellung von Mikrozahnrädern mit Modul < 0,2 wird zunächst eine Elektrode mit entsprechender Geometrie aus erodierbarer Keramik hergestellt. Diese Elektrode 10 wird komplett mit Kupfer beschichtet. Die Schichtstärke wird gezielt auf 0,01 mm eingestellt. Anschließend wird die Kupferschicht mittels EDM-Bearbeitung an den gewünschten Stellen entfernt. Mit dieser Elektrode wird dann der ECM (electrochemical machining)-Prozess durchgeführt. Die laterale Abstrahlfläche kann auf < 0,02 mm genau eingehalten werden.

Ein weiterer wesentlicher Vorteil der Herstellung des Elektrodenkörpers 11 aus erodierbarer Keramik besteht darin, dass dieser eine hohe Steifigkeit besitzt und somit bei der Vibration der Elektrode wenig selbst in Vibration versetzt wird. Dadurch wird eine präzise Bearbeitung unterstützt.

## Patentansprüche

1. Elektrode zur Bearbeitung eines Werkstückes (3) unter elektrochemischem Abtragen von metallischem Werkstoff mit einem Elektrodenkörper (11), der aus einem wenig leitenden Werkstoff ohne isolierende Beschichtung um den Arbeitsbereich hergestellt ist, und mit einer auf diesem zumindest in einem Arbeitsbereich aufgetragenen Beschichtung (12),
**dadurch gekennzeichnet,**
**dass** die Beschichtung (12) aus einem relativ zu dem Elektrodenkörper (11) elektrisch hoch leitenden Beschichtungsmaterial gebildet ist und
**dass** der wenig leitende Werkstoff aus der Stoffgruppe der erodierbaren Keramiken oder der elektrisch leitenden Perowskite gewählt ist.

2. Elektrode nach Anspruch 1,
**dadurch gekennzeichnet,**
**dass** das elektrisch leitende Beschichtungsmaterial mittels eines Galvanisierungsverfahrens elektrolytisch auf dem Elektrodenkörper (11) aufgetragen ist.

3. Elektrode nach einem der vorhergehenden Ansprüche,
**dadurch gekennzeichnet,**
**dass** die Beschichtung (12) großflächig aufgetragen und an definierten, für die Bearbeitung eines Werkstücks (3) nicht gewünschten Stellen abgetragen ist.

4. Elektrode nach einem der vorhergehenden Ansprüche,
**dadurch gekennzeichnet,**
**dass** als Beschichtungsmaterial ein Edelmetall oder Halbedelmetall verwendet ist.

5. Elektrode nach Anspruch 4,
**dadurch gekennzeichnet,**
**dass** das Beschichtungsmaterial Kupfer, Silber oder Legierungen derselben ist.

6. Elektrode nach einem der vorhergehenden Ansprüche,
**dadurch gekennzeichnet,**
**dass** der Elektrodenkörper (11) zumindest im Arbeitsbereich mittels eines Erodierverfahrens formgebend bearbeitet ist.

7. Elektrode nach einem der vorhergehenden Ansprüche,
**dadurch gekennzeichnet,**
**dass** der Elektrodenkörper (11) in seinem Inneren in mindestens einem Kanal (14) mit einer mit der Beschichtung (12) unmittelbar elektrisch verbundenen elektrisch leitenden Leitschicht (15) versehen ist, die bei der Bearbeitung elektrisch leitend mit dem Minuspol einer Spannungsquelle verbunden ist, an deren Pluspol bei der Bearbeitung das metallische Werkstück (3) angeschlossen ist.

8. Verfahren zum Herstellen einer Elektrode (10) nach einem der vorhergehenden Ansprüche,
**dadurch gekennzeichnet,**
**dass** ein Elektrodenkörper (11) aus einer erodierbaren Keramik oder einem elektrisch leitenden Perowskit hergestellt wird,
**dass** der Elektrodenkörper (11) zumindest im Arbeitsbereich mittels eines Erodierverfahrens formgebend bearbeitet wird und
**dass** der Elektrodenkörper (11) zumindest in dem geformten Arbeitsbereich mittels eines elektrisch leitfähigen Beschichtungsmaterials beschichtet wird.

9. Verfahren nach Anspruch 8,
**dadurch gekennzeichnet,**
**dass** im Anschluss an den Beschichtungsvorgang an definierten Stellen die Beschichtung abgetragen wird.

10. Verfahren nach Anspruch 8 oder 9,
**dadurch gekennzeichnet,**
**dass** die Beschichtung (12) elektrolytisch mittels eines Galvanisierungsverfahrens aufgetragen wird.

11. Verfahren nach Anspruch 8 oder 9,
**dadurch gekennzeichnet,**
**dass** die Beschichtung (12) mittels CVD (chemical vapour deposition)- oder mittels PVD (physical vapour deposition)-Verfahren erfolgt.

12. Verfahren nach einem der Ansprüche 8 bis 11,
**dadurch gekennzeichnet,**
**dass** die Beschichtung (12) an den definierten, nicht gewünschten Stellen mittels eines EDM-Verfahrens durch elektrisches Entladen in nichtleitender Flüssigkeit abgetragen wird.

13. Verwendung einer Elektrode nach einem der Ansprüche 1 bis 7 oder hergestellt nach einem der Ansprüche 8 bis 12 in einer Vorrichtung zur Bearbeitung von metallischen Werkstücken (3) durch elektrochemisches Abtragen, bei dem der metallische Werkstoff des Werkstückes (3) mit einem in Ionen dissoziierten elektrisch leitenden Wirkmedium unter Einwirkung von elektrischem Strom zu einer chemischen Verbindung reagiert, welche im Wirkmedium löslich ist oder ausfällt.

## Claims

1. An electrode for machining a workpiece (3) by electrochemical removal of metal material, having an electrode body (11) which is made from a less conductive material without insulating coating around the working region, and having a coating (12) which is deposited thereon at least in a working region,
**characterized in that**
the coating (12) is formed from a coating material which is electrically high-conductive relative to the electrode body (11), and
that the less conductive material is chosen from the group of materials comprising the erodible ceramics or the electrically conductive perovskites.

2. The electrode according to claim 1,
**characterized in that**
the electrically conductive coating material is electrolytically deposited on the electrode body (11) by means of a galvanizing method.

3. The electrode according to one of the preceding claims,
**characterized in that**
the coating (12) is deposited over a large area and is removed in defined places which are not required for machining a workpiece (3).

4. The electrode according to one of the preceding claims,
**characterized in that**
a noble metal or semi-noble metal is used as the coating material.

5. The electrode according to claim 4,
**characterized in that**
the coating material is copper, silver or alloys thereof.

6. The electrode according to one of the preceding claims,
**characterized in that**
the electrode body (11) is machined at least in the working region in a formative manner by means of an eroding method.

7. The electrode according to one of the preceding claims,
**characterized in that**
in its interior, the electrode body (11) is provided in at least one channel (14) with an electrically conductive conducting layer (15) which is directly electrically connected to the coating (12), and which, during machining, is electrically conductively connected to the minus pole of a voltage source, to the plus pole of which the metal workpiece (3) is connected during machining.

8. A method for producing an electrode (10) according to one of the preceding claims,
**characterized in that**
an electrode body (11) is produced from an erodible ceramic or an electrically conductive perovskite,
that the electrode body (11) is machined at least in the working region in a formative manner by means of an eroding method, and
that the electrode body (11) is coated at least in the formed working region by means of an electrically conductive coating material.

9. The method according to claim 8,
**characterized in that**
the coating is removed in defined places following the coating operation.

10. The method according to claim 8 or 9,
**characterized in that**
the coating (12) is electrolytically deposited by means of a galvanizing method.

11. The method according to claim 8 or 9,
**characterized in that**
the coating (12) is carried out by means of CVD (chemical vapor deposition) or by means of PVD (physical vapor deposition) methods.

12. The method according to one of claims 8 to 11,
**characterized in that**
the coating (12) is removed in the defined, unwanted places by means of an EDM method by electrically discharging in non-conductive liquid.

13. The use of an electrode according to one of claims 1 to 7 or produced according to one of claims 8 to 12 in a device for machining metal workpieces (3) by electrochemical removal, in which the metal material of the workpiece (3) reacts with an electrically conductive active medium, which is dissociated in ions, under the action of electrical current to form a chemical compound which is soluble or precipitates in the active medium.

## Revendications

1. Électrode pour usinage d'une pièce (3) par érosion électrochimique de matériau métallique avec un corps d'électrode (11), qui est fabriqué dans un matériau peu conducteur sans revêtement isolant autour de la zone de travail, et un revêtement (12) appliqué sur celle-ci au moins dans une zone de travail,
**caractérisée en ce que** :
le revêtement (12) est formé d'un matériau de revêtement électriquement très conducteur par rapport au corps d'électrode (11) et
le matériau peu conducteur est choisi dans le groupe de matériaux formé des céramiques érosives ou des pérovskites conductrices de l'électricité.

2. Électrode selon la revendication 1,
**caractérisée en ce que** :
le matériau de revêtement conducteur de l'électricité est appliqué par voie électrolytique sur le corps d'électrode (11) au moyen d'un procédé de galvanisation.

3. Électrode selon l'une quelconque des revendications précédentes,
**caractérisée en ce que** :
le revêtement (12) est appliqué sur une grande surface et est érodé en des emplacements définis non souhaités pour le traitement d'une pièce (3).

4. Électrode selon l'une quelconque des revendications précédentes,
**caractérisée en ce que** :
l'on utilise comme matériau de revêtement un métal noble ou un métal semi-noble.

5. Électrode selon la revendication 4,
**caractérisée en ce que** :
le matériau de revêtement est du cuivre, de l'argent ou des alliages de ceux-ci.

6. Électrode selon l'une quelconque des revendications précédentes,
**caractérisée en ce que** :
le corps d'électrode (11) est usiné de manière élaborée au moins dans la zone de travail au moyen d'un procédé d'érosion.

7. Électrode selon l'une quelconque des revendications précédentes,
**caractérisée en ce que** :
le corps d'électrode (11) est pourvu dans sa partie interne dans au moins un canal (14) d'une couche conductrice de l'électricité (15) connectée électriquement directement au revêtement (12), laquelle couche est connectée,
lors de l'usinage, en mode conducteur de l'électricité au pôle moins d'une source de tension au pôle plus duquel la pièce métallique (3) est connectée au cours de l'usinage.

8. Procédé de fabrication d'une électrode (10) selon l'une quelconque des revendications précédentes,
**caractérisé en ce que** :
un corps d'électrode (11) est fabriqué en une céramique érosive ou une pérovskite conductrice de l'électricité,
le corps d'électrode (11) est usiné de manière élaborée au moins dans la zone de travail au moyen d'un procédé d'érosion et
le corps d'électrode (11) est revêtu au moins dans la zone de travail formée au moyen d'un matériau de revêtement conducteur de l'électricité.

9. Procédé selon la revendication 8,
**caractérisé en ce que** :
le revêtement est érodé en des emplacements définis à la suite de l'opération de revêtement.

10. Procédé selon la revendication 8 ou 9,
**caractérisé en ce que** :
le revêtement (12) est appliqué par voie électrolytique au moyen d'un procédé de galvanisation.

11. Procédé selon la revendication 8 ou 9,
**caractérisé en ce que** :
le revêtement (12) se fait par un procédé CVD (dépôt en vapeur chimique) ou
par un procédé PVD (dépôt en vapeur physique).

12. Procédé selon l'une quelconque des revendications 8 à 11,
**caractérisé en ce que** :
le revêtement (12) est érodé aux emplacements définis non souhaités au moyen d'un procédé EDM par décharge électrique dans un liquide non conducteur.

13. Utilisation d'une électrode selon l'une quelconque des revendications 1 à 7 ou fabriquée selon l'une quelconque des revendications 8 à 12 dans un dispositif pour usinage de pièces métalliques (3) par érosion électrochimique, dans laquelle le matériau métallique de la pièce (3) réagit avec un agent actif conducteur de l'électricité dissocié en ions sous l'action d'un courant électrique pour obtenir un composé chimique qui est soluble ou précipite dans le milieu actif.
